# EUROPÄISCHE PATENTSCHRIFT

(11) **EP 2 852 016 B1**
(45) Veröffentlichungstag und Bekanntmachung des Hinweises auf die Patenterteilung: **13.02.2019**
(21) Anmeldenummer: 14165106.7
(22) Anmeldetag: 17.04.2014
(51) Int. Cl.: H02G 3/08, H02G 3/12

(54) **Elektrisches/elektronisches Installationsgerät**
Electric/electronic installation device
Appareil d'installation électrique/électronique

(30) Priorität: 23.09.2013 DE 102013110460
(43) Veröffentlichungstag der Anmeldung: 25.03.2015
(73) Patentinhaber: Berker GmbH & Co. KG, 58579 Schalksmühle (DE)
(72) Erfinder: Richter, Michael, 58579 Schalksmühle (DE)
(74) Vertreter: Nuss, Laurent

(56) Entgegenhaltungen:
- EP-A1- 1 241 741
- EP-A2- 2 552 085
- EP-A2- 2 602 888
- CH-A5- 585 472
- DE-A1- 10 229 930
- DE-B4-102010 016 345
- DE-U- 7 038 846
- US-A- 5 823 821
- US-A- 5 913 439

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind oftmals als Schaltgeräte oder als bildschirmgeführte Steuergeräte ausgeführt und in der Regel dafür vorgesehen, die Ein- und Ausschaltung von Stromkreisen bzw. die Umschaltung von Stromkreisen gegebenenfalls über ein Bussystem zu bewirken. Über solche elektrische/elektronische Installationsgeräte können gegebenenfalls auch verschiedene Informationen zur Anzeige gebracht werden. Außerdem sind solche elektrischen/elektronischen Installationsgeräte oftmals auch als sogenannte Türkommunikationsgeräte ausgeführt und zur Bedienung der Klingel bzw. Türsprechanlage eines Gebäudes vorgesehen. Solche Türkommunikationsgeräte können bei Bedarf auch mit einer Kameraanlage ausgerüstet sein. Die Betätigung solcher elektrischer/elektronischer Installationsgeräte kann zum Beispiel durch das Verstellen eines beispielsweise als Taste, Wippe usw. ausgebildeten Betätigungsgliedes erfolgen, wobei die Funktionsstellungen zum Beispiel tastend ausgeführt sein können. Zur Betätigung kann auch ein sogenannter Touchscreen Verwendung finden. Oftmals sind solche elektrischen/elektronischen Installationsgeräte zur Installation in Installationsdosen oder in Einbaugehäusen vorgesehen, wobei die zur Verwendung kommenden Befestigungsvorrichtungen, wie zum Beispiel Spreizkrallen, Schraubverbindungen usw. dafür vorgesehen sind, eine einfache Festlegung und bei Bedarf eine einfache Entnahme solcher elektrischer/elektronischer Installationsgeräte zu ermöglichen.

Ein elektrisches/elektronisches Installationsgerät ist durch die DE 10 2010 016 345 B4 bekannt geworden. Dieses als Steuergerät für ein Gebäudeinstallationssystem ausgeführtes elektrisches/elektronisches Installationsgerät ist für eine wieder entnehmbaren Montage in ein Einbaugehäuse vorgesehen, welches ortsfest in eine Wand eines Gebäudes eingebaut ist. Das elektrische/elektronische Installationsgerät weist ein, an einer Trägeranordnung festlegbares Funktionsmodul auf, wobei an der Trägeranordnung auch eine Designabdeckung festlegbar ist und wobei die Trägeranordnung zur Festlegung in dem Einbaugehäuse vorgesehen ist. Die Trägeranordnung ist vergleichsweise komplex aufgebaut und auch die Handhabung zum Einbau bzw. Ausbau ist vergleichsweise aufwendig. Weiterer Stand der Technik ist in DE 102 29 930 A1, EP 2 552 085 A2 und DE 70 38 846 U zu finden.

Der vorliegenden Erfindung liegt deshalb die Aufgabe zugrunde ein elektrisches/elektronisches Installationsgerät zu schaffen, welches hinsichtlich der Festlegung in und der Entnahme aus dem zugehörigen Einbaugehäuse bei automatischem Putzausgleich besonders einfach und komfortabel zu handhaben ist. Diese Aufgabe wird durch die im kennzeichnenden Teil des Hauptanspruches angegebenen Merkmale gelöst.

Bei einem solchermaßen ausgebildeten elektrischen/elektronischen Installationsgerät ist besonders vorteilhaft, dass die Festlegung im Einbaugehäuse völlig werkzeuglos durch einfaches Einsetzen bei automatischer Verriegelung beziehungsweise Verrastung erfolgt. Bei der Entnahme ist zum Lösen der Verriegelung beziehungsweise Verrastung lediglich eines der Rastmittel durch einen einfachen Vorgang zu betätigen, womit die Verrastung beziehungsweise Verriegelung gelöst wird. Danach kann das elektrische/elektronische Installationsgerät ohne weiteres Zutun einfach aus dem Einbaugehäuse entnommen werden.

Weiterhin ist besonders vorteilhaft, wenn zumindest ein erstes Rastmittel in Art einer fensterartigen Öffnung und ein zweites Rastmittel in Art einer Rastfeder ausgeführt sind, weil damit besonders einfach aufgebaute und kostengünstig herzustellende und zu montierende Bauteile Verwendung finden.

Weitere vorteilhafte Ausgestaltungen sind in den Unteransprüchen angegeben. Anhand eines in den Zeichnungen dargestellten Ausführungsbeispieles sei der erfindungsgemäße Gegenstand näher erläutert. Dabei zeigen:

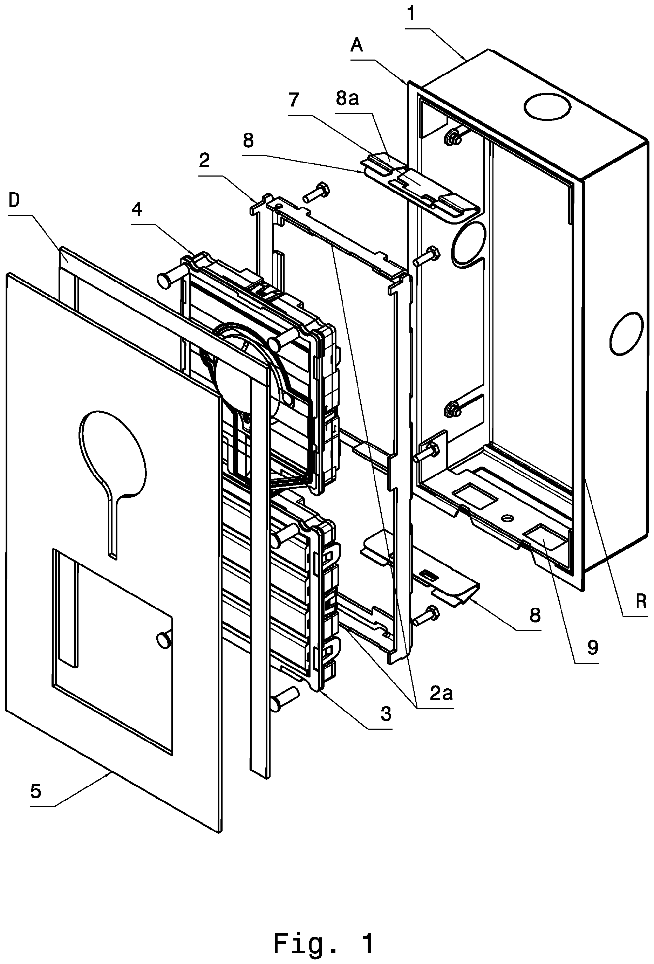

- Fig. 1:: prinziphaft eine Explosionsdarstellung des elektrischen/elektronischen Installationsgerätes, in Zuordnung eines Einbaugehäuses in räumlicher Darstellung;

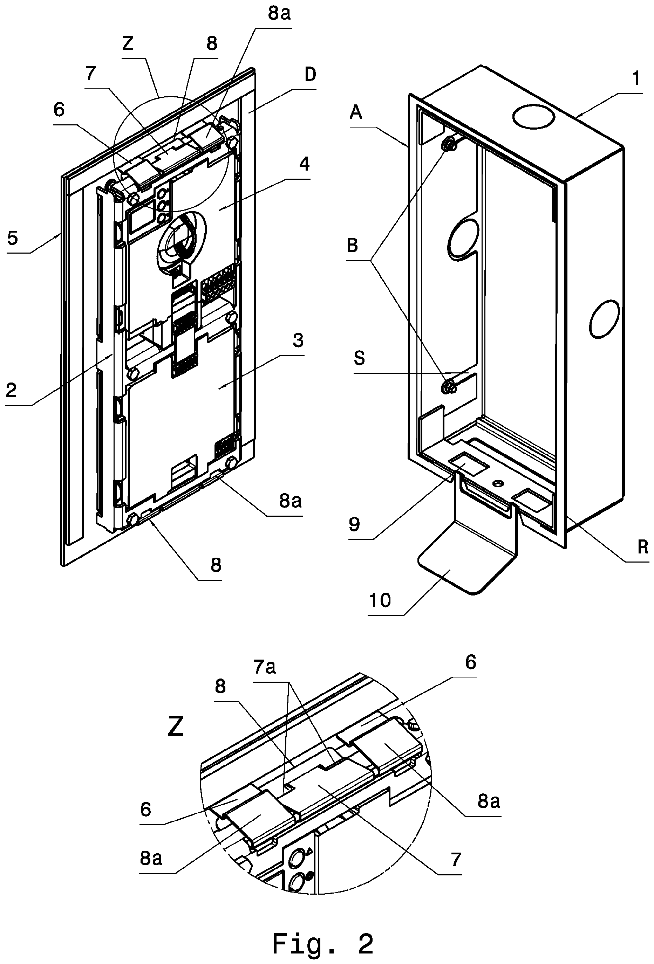

- Fig. 2:: prinziphaft einen Zusammenbau des elektrischen/elektronischen Installationsgerätes und des Einbaugehäuses gemäß Figur 1 in räumlicher Darstellung;

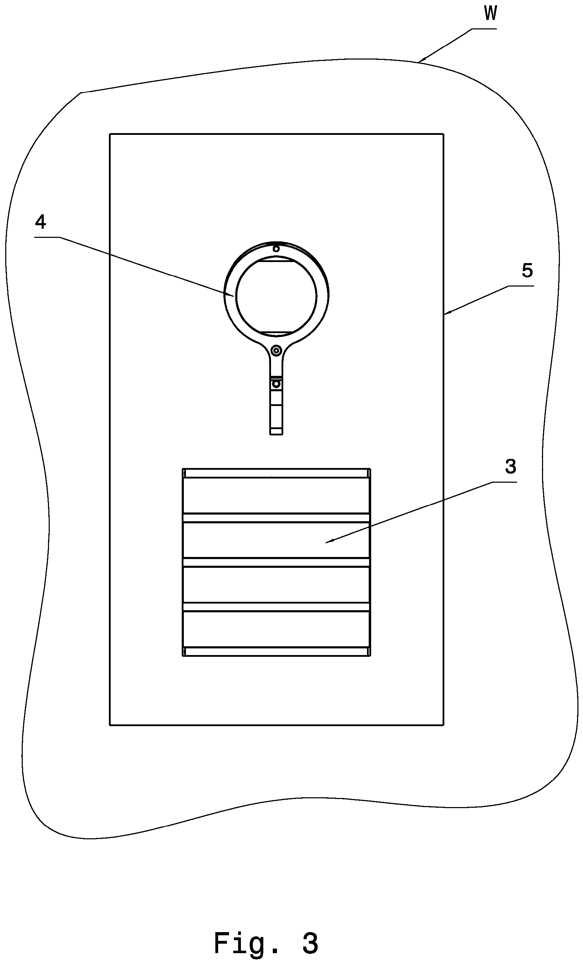

- Fig. 3:: prinziphaft eine Draufsicht auf ein elektrisches/elektronisches Installationsgerät gemäß Figur 1 im Einbauzustand;

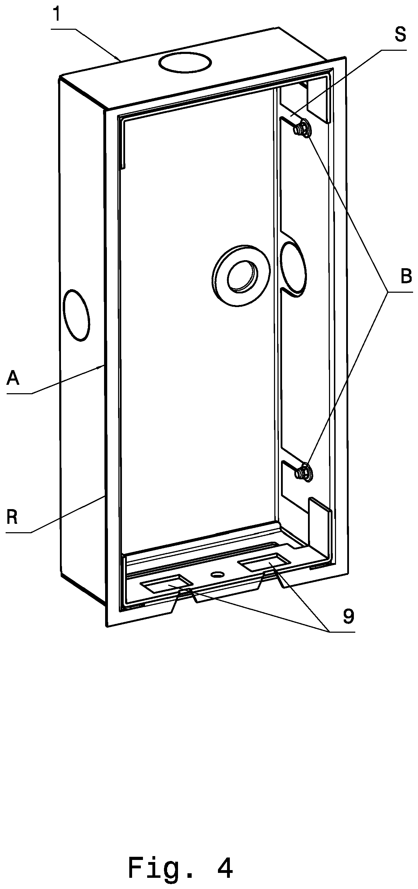

- Fig. 4:: prinziphaft einen Ausgleichseinsatz in Zuordnung eines Einbaugehäuses, räumlich in schräger Draufsicht.

Wie aus den Figuren hervorgeht, ist das elektrische/elektronische Installationsgerät zur wieder entnehmbaren Montage in ein Einbaugehäuse 1 vorgesehen. Das Einbaugehäuse 1 ist wiederum zur ortsfesten Installation in oder an (im Innenbereich oder im Außenbereich) Gebäuden vorgesehen. Das elektrische/elektronische Installationsgerät weist mehrere, an einer Trägeranordnung 2 festlegbare Funktionsmodule 3,4 auf, wobei an der Trägeranordnung 2 auch eine Designabdeckung 5 festlegbar ist. Die Trägeranordnung 2 ist zur Festlegung in dem Einbaugehäuse 1 vorgesehen. Um einen automatischen Putzausgleich auf einfache Art und Weise zu ermöglichen, ist im Einbaugehäuse 1 ein Ausgleichseinsatz A vorhanden, welcher in seiner Einbautiefe verstellbar im Einbaugehäuse 1 gehalten ist. Der Ausgleichseinsatz A ist also funktional dem Einbaugehäuse 1 zuzurechnen. Der Ausgleichseinsatz A weist zwei erste Rastmittel 9 auf, welche verrastend mit jeweils einem zugehörigen zweiten Rastmittel 8 zusammenwirken, welche jeweils an der Trägeranordnung 2 angebracht sind. Die beiden am Ausgleichseinsatz A vorhandenen ersten Rastmittel 9 sind jeweils in Art einer fensterartigen Öffnung ausgeführt und in zwei Seitenwände eingebracht, welche einander gegenüberliegend angeordnet sind. Die beiden an der Trägeranordnung 2 vorhandenen zweiten Rastmittel 8 sind jeweils in Art einer Rastfeder ausgeführt. Jedes der beiden zweiten Rastmittel 8 weist zwei Rastschenkel 8a auf, die zu ihrer Betätigung jeweils mit einer eigenen Betätigungsbasis 6 versehen sind. Die ersten Rastmittel 9 und die zweiten Rastmittel 8 sind durch die Designabdeckung 5 verdeckt angeordnet.

Wie des Weiteren aus den Figuren hervorgeht, weist jedes der beiden an der Trägeranordnung 2 angebrachte zweite Rastmittel 8 (Rastfeder) einen, zwischen den beiden Rastschenkeln 8a angeordneten Halteschenkel 7 auf. Die Anbringung der Rastfedern (zweite Rastmittel 8) an der Trägeranordnung 2 erfolgt über den Halteschenkel 7, an welchen zwei Rastnasen 7a angeformt sind, die jeweils eine entsprechend ausgeführte Rastkante 2a der Trägeranordnung 2 hintergreifen. Auf einfache Art und Weise sind somit die beiden zweiten Rastmittel 8 (Rastfedern) an der Trägeranordnung 2 positionsgenau festgelegt. Die Rastschenkel 8a und die als fensterartige Öffnungen ausgeführten ersten Rastmittel 9 sind maßlich derart aufeinander abgestimmt bzw. derart ausgelegt, dass während der Montage des elektrischen/elektronischen Installationsgerätes im Einbaugehäuse 1 bzw. Ausgleichseinsatz A eine Führung in senkrechter Richtung gewährleistet ist. Das bedeutete, dass das elektrische/elektronische Installationsgerät nicht durch eine Schwenkbewegung, sondern über eine senkrecht, hinsichtlich der Wand W verlaufende Einbaubewegung in das Einbaugehäuse 1 eingesetzt werden kann. Befindet sich das elektrische/elektronische Installationsgerät in seiner Festlegungsposition, wirken die als Rastfedern ausgeführten zweiten Rastmittel 8 unter Vorspannung mit den ersten Rastmitteln 9 zusammen. Das elektrische/elektronische Installationsgerät ist somit sicher gehalten im Einbaugehäuse 1 bzw. Ausgleichseinsatz A eingebaut.

Wie zudem des Weiteren aus den Figuren hervorgeht, ist das Einbaugehäuse 1 in Art eines rechteckförmigen Kastens ausgeführt und der Ausgleichseinsatz A weist eine rahmenartige Ausführung auf und kommt mit seinen Außenwänden an den Innenwandungen des Einbaugehäuses 1 zur Anlage. Um auf einfache Art und Weise einen Putzausgleich zu realisieren, weist der Ausgleichseinsatz A vier in Montagerichtung verlaufende Schlitze S auf, welche mit Befestigungsschrauben B des Einbaugehäuses 1 zusammenwirken. Nach dem Einputzen des Einbaugehäuses 1 kann also auf einfache Art und Weise der Putzausgleich automatisch vorgenommen werden, indem der Ausgleichseinsatz A soweit in das Einbaugehäuse 1 eingeschoben wird, bis dieser mit seinem überkragenden Randbereich R auf der Wand W zur Anlage kommt. Anschließend wird der Ausgleichseinsatz A durch Anziehen der Befestigungsschrauben B im Einbaugehäuse 1 positionssicher festgesetzt. Um die Trägeranordnung 2 am Ausgleichseinsatz A beziehungsweise im Einbaugehäuse 1 auf einfache Art und Weise festzulegen, weist jeder der beiden zweiten Rastmittel 8 (Rastfedern) - wie bereits beschrieben - zwei federnd ausgeführte Rastschenkel 8a auf, welche verrastend mit den zugehörigen ersten Rastmitteln 9 (fensterartige Öffnungen) zusammenwirken, welche in den Ausgleichseinsatz A eingebracht sind. Automatisch schnappen die vier Rastschenkel 8a in die vier, als fensterartige Öffnungen ausgeführten ersten Rastmittel 9 ein, wenn die Trägeranordnung 2 in das Einbaugehäuse 1 beziehungsweise den Ausgleichseinsatz A eingesetzt wird. Die vier Rastschenkel 8a befinden sich unter Vorspannung durch Federrastung in ihrer Festlegungsposition. Das Einsetzen beziehungsweise die Einnahme der Festlegungsposition erfolgt einfach durch eine Eindrückbewegung, mit der die Trägeranordnung 2 selbst ohne einen Schwenkvorgang am Einbaugehäuse 1 beziehungsweise im Ausgleichseinsatz A festgelegt werden kann. Zur Entnahme der Trägeranordnung 2 aus dem Einbaugehäuse 1 werden die beiden Rastschenkel 8a eines der beiden zweiten Rastmittel 8 durch ein Entriegelungswerkzeug 10 betätigt, wobei das Entriegelungswerkzeug 10 jeweils mit der Betätigungsbasis 6 der beiden zugehörigen Rastschenkel 8a zusammenwirkt. Durch eine einfache Schiebebewegung werden die beiden Rastschenkel 8a durch das als Entriegelungsblech ausgeführte Entriegelungswerkzeug 10 aus ihrer Verrastung mit den beiden zugehörigen ersten Rastmittel 9 des Ausgleichseinsatzes A gelöst und in ihre Entnahmeposition gebracht. Die Entnahme des elektrischen/elektronischen Installationsgerätes aus dem Einbaugehäuse 1 bzw. Ausgleichseinsatz A ist nun ohne Weiteres auf bequeme Art und Weise möglich.

Üblicherweise ist das Einbaugehäuse 1 zur Unterputzmontage vorgesehen, weshalb ein automatischer Putzausgleich von besonderem Vorteil ist. Bei dem vorliegenden Ausführungsbeispiel ist das elektrische/elektronische Installationsgerät als Türkommunikationsgerät ausgebildet. Das elektrische/elektronische Installationsgerät kann dabei dem Außenbereich oder dem Innenbereich einer Eingangstür zugeordnet, also nahe der Eingangstür in die zugehörige Wand W des Gebäudes, eingebaut sein. Um für eine Abdichtung gegenüber der Oberfläche der Wand W Sorge zu tragen, ist die Designabdeckung 5 an ihrer, der Wand W zugeordneten Rückseite mit einer elastischen Dichtung D versehen. Das erste Funktionsmodul 3 weist bei dem vorliegenden Ausführungsbeispiel vier Betätigungstasten auf und ist dafür vorgesehen, anforderungsgerecht jeweils die zugehörige Türklingel in Funktion zu setzen. Das zweite Funktionsmodul 4 beinhaltet einen wesentlichen Teil der Funktionskomponenten der Türsprechanlage, ist also üblicherweise mit einem Lautsprecher, Mikrophon, elektrischen/elektronischen Steuerkomponenten und so weiter ausgerüstet. Um die Betätigungsmöglichkeit der zweiten Rastmittel 8 (Rastfedern) für Unbefugte zu erschweren, sind diese von der Designabdeckung 5 überdeckt.

Wie des Weiteren aus den Figuren hervorgeht, erfolgt bei einem solchermaßen ausgebildeten elektrischen/elektronischen Installationsgerät die Festlegung im Einbaugehäuse 1 beziehungsweise am Ausgleichseinsatz A völlig werkzeuglos, weil durch einfaches Einsetzen eine automatische Verriegelung bzw. Verrastung erfolgt (Festlegungsposition). Das ist deshalb der Fall, weil beim Einsetzen die als Rastfedern ausgebildeten zweiten Rastmittel 8 im Sinne einer Federrastung mit den fensterartig ausgeführten ersten Rastmitteln 9 zusammenwirken und damit unter Vorspannung eine automatische Festlegung des elektrischen/elektronischen Installationsgerätes im Einbaugehäuse 1 beziehungsweise am Ausgleichseinsatz A bewirken. Bei der Entnahme ist zum Lösen der Verriegelung beziehungsweise Verrastung lediglich die verdeckt angeordnete Betätigungsbasis 6 der beiden Rastschenkel 8a von einem der beiden zweiten Rastmittel 8 mittels des Entriegelungswerkzeug 10 durch eine Schiebebewegung zu betätigen, womit die Verriegelung beziehungsweise Verrastung durch eine einfache, gradlinige Bewegung gelöst wird (Entnahmeposition). Danach kann das elektrische/elektronische Installationsgerät ohne weiteres Zutun einfach aus dem Einbaugehäuse 1 entnommen werden.

Um bei Montage- oder Reparaturarbeiten die durchzuführenden Tätigkeiten für die damit betraute Person zu erleichtern, ist an der Trägeranordnung 2 eine laschenartige Halteanordnung 12 angebracht, welche einerseits zur Befestigung eines Halteseiles dient, welches andererseits am Einbaugehäuse 1 festgelegt ist, womit eine sichere Haltemöglichkeit für das aus dem Einbaugehäuse 1 entnommene elektrische/elektronische Installationsgerät realisiert ist. Der Einfachheit halber ist das Halteseil nicht dargestellt.

### Bezugszeichenliste

- 1: Einbaugehäuse
- 2: Trägeranordnung
- 2a: Rastkante
- 3: Erstes Funktionsmodul
- 4: Zweites Funktionsmodul
- 5: Designabdeckung
- 6: Betätigungsbasis
- 7: Halteschenkel
- 7a: Rastnasen
- 8: Zweite Rastmittel
- 8a: Rastschenkel
- 9: Erste Rastmittel
- 10: Entriegelungswerkzeug

- A: Ausgleichseinsatz
- B: Befestigungsschrauben
- D: Dichtung
- R: Randbereich
- S: Schlitze
- W: Wand

## Patentansprüche

1. Elektrisches/elektronisches Installationsgerät, vorgesehen zur wieder entnehmbaren Montage in ein Einbaugehäuse (1), welches ortsfest in oder an einem Gebäude angebracht ist, wobei das elektrische/elektronische Installationsgerät zumindest eine Trägeranordnung (2), eine Designabdeckung (5), einen in seiner Einbautiefe verstellbaren rahmenartig ausgeführten Ausgleichseinsatz (A) und ein an einer Trägeranordnung festgelegtes Funktionsmodul (3,4) aufweist, wobei die Designabdeckung (5) an der Trägeranordnung (2) festlegbar ist und wobei die Trägeranordnung (2) zur Festlegung in dem Einbaugehäuse vorgesehen ist, wobei der Ausgleichseinsatz (A) derart ausgebildet ist, um in dem Einbaugehäuse (1) derart gehalten werden zu können, dass Außenwände des Ausgleicheinsatzes an Innenwandungen des Einbaugehäuses (1) zur Anlage kommen, wobei der Ausgleicheinsatz (A) zum Putzausgleich vier in Montagerichtung verlaufende Schlitze (S) aufweist, die mit Befestigungsschrauben (B) des Einbaugehäuses (1) zusammenwirken **dadurch gekennzeichnet, dass** der Ausgleichseinsatz (A) zumindest ein erstes Rastmittel (9) aufweist, welches geeignet ist, verrastend mit einem zweiten Rastmittel (8) zusammen zu wirken, welches an der Trägeranordnung (2) vorhanden ist, wobei das erste Rastmittel (9) und/oder das zweite Rastmittel (8) in Art einer Rastfeder ausgeführt ist.

2. Elektrisches/elektronisches Installationsgerät nach Anspruch 1, **dadurch gekennzeichnet, dass** zumindest ein erstes Rastmittel (9) und/oder ein zweites Rastmittel (8) in Art einer Öffnung ausgeführt ist.

3. Elektrisches/elektronisches Installationsgerät nach einem der Ansprüche 1 oder 2, **dadurch gekennzeichnet, dass** zumindest ein erstes Rastmittel (9) und/oder ein zweites Rastmittel (8) in Art einer Ausnehmung ausgeführt ist.

4. Elektrisches/elektronisches Installationsgerät nach einem der Ansprüche 1 bis 3, **dadurch gekennzeichnet, dass** zumindest ein erstes Rastmittel (9) und/oder ein zweites Rastmittel (8) in Art einer Rastnase ausgeführt ist.

5. Elektrisches/elektronisches Installationsgerät nach einem der Ansprüche 1 bis 4, **dadurch gekennzeichnet, dass** am Ausgleichseinsatz (A) zumindest zwei erste Rastmittel (9) vorhanden sind.

6. Elektrisches/elektronisches Installationsgerät nach einem der Ansprüche 1 bis 5, **dadurch gekennzeichnet, dass** an der Trägeranordnung (2) zumindest zwei zweite Rastmittel (8) vorhanden sind.

7. Elektrisches/elektronisches Installationsgerät nach einem der Ansprüche 1 bis 6, **dadurch gekennzeichnet, dass** zumindest an einem ersten Rastmittel (9) und/oder zweiten Rastmittel (8) zumindest eine zum Zusammenwirken mit einem Entriegelungswerkzeug (10) vorgesehene Betätigungsbasis (6) vorhanden ist.

8. Elektrisches/elektronisches Installationsgerät nach einem der Ansprüche 1 bis 7, **dadurch gekennzeichnet, dass** das zumindest eine erste Rastmittel (9) und dass das zumindest eine zweite Rastmittel (8) durch die Designabdeckung (5) verdeckt angeordnet ist.

9. Elektrisches/elektronisches Installationsgerät nach einem der Ansprüche 1 bis 8, **dadurch gekennzeichnet, dass** zumindest ein als Rastfeder ausgeführtes zweites Rastmittel (8) zumindest einen, haltend mit einer Rastkante (8a) der Trägeranordnung (2) zusammenwirkenden Halteschenkel (7) und zumindest einen, rastend mit dem ersten Rastmittel (9) des Ausgleichseinsatzes (A) zusammenwirkenden Rastschenkel (8a) aufweist.

## Claims

1. Electric/electronic installation equipment, intended for being removably mounted in a flush-mounted housing (1) which is attached in fixed manner in or to a building, wherein the electric/electronic installation equipment has at least one support arrangement (2), a design cover (5), an adjustment insert (A) which is embodied in the manner of a frame and is adjustable in its installation depth, and a function module (3, 4) fixed on a support arrangement, wherein the design cover (5) can be fixed on the support arrangement (2), and wherein the support arrangement (2) is intended for fixing in the flush-mounted housing, wherein the adjustment insert (A) is formed so that it can be held in the flush-mounted housing (1) such that outer walls of the adjustment insert come to lie against inner walls of the flush-mounted housing (1), wherein the adjustment insert (A) for adjustment to the plaster surface has four slots (S) running in the mounting direction which cooperate with fastening screws (B) of the flush-mounted housing (1), **characterised in that**
the adjustment insert (A) has at least one first latching means (9) which is suitable for cooperating in latching manner with a second latching means (8) which is present on the support arrangement (2), the first latching means (9) and/or the second latching means (8) being embodied in the manner of a latching spring.

2. Electric/electronic installation equipment according to Claim 1, **characterised in that** at least one first latching means (9) and/or one second latching means (8) is embodied in the manner of an opening.

3. Electric/electronic installation equipment according to one of Claims 1 or 2, **characterised in that** at least one first latching means (9) and/or one second latching means (8) is embodied in the manner of a recess.

4. Electric/electronic installation equipment according to one of Claims 1 to 3, **characterised in that** at least one first latching means (9) and/or one second latching means (8) is embodied in the manner of a latching nose.

5. Electric/electronic installation equipment according to one of Claims 1 to 4, **characterised in that** at least two first latching means (9) are present on the adjustment insert (A).

6. Electric/electronic installation equipment according to one of Claims 1 to 5, **characterised in that** at least two second latching means (8) are present on the support arrangement (2).

7. Electric/electronic installation equipment according to one of Claims 1 to 6, **characterised in that** at least one activation base (6) intended to cooperate with an unlocking tool (10) is present at least on a first latching means (9) and/or second latching means (8).

8. Electric/electronic installation equipment according to one of Claims 1 to 7, **characterised in that** the at least one first latching means (9) and **in that** the at least one second latching means (8) is arranged covered by the design cover (5).

9. Electric/electronic installation equipment according to one of Claims 1 to 8, **characterised in that** at least one second latching means (8) embodied as a latching spring has at least one holding arm (7) which cooperates for holding with a latching edge (8a) of the support arrangement (2) and at least one latching arm (8a) which cooperates in a latching manner with the first latching means (9) of the adjustment insert (A).

## Revendications

1. Appareil d'installation électrique/électronique, destiné à être monté de manière amovible dans un boîtier de montage (1) qui est fixé à demeure dans ou sur un bâtiment, l'appareil d'installation électrique/électronique présentant au moins une structure de support (2), un couvercle design (5), un insert de compensation (A) en forme de cadre, dont la profondeur de montage est réglable, et un module fonctionnel (3, 4) fixé sur une structure de support, le couvercle design (5) pouvant être fixé sur la structure de support (2) et la structure de support (2) étant prévue pour être fixée dans le boîtier de montage, l'insert de compensation (A) étant réalisé de façon à pouvoir être maintenu dans le boîtier de montage (1) de sorte que les parois extérieures de l'insert de compensation viennent s'appliquer contre les parois intérieures du boîtier de montage (1), l'insert de compensation (A) présentant quatre fentes (S) s'étendant dans la direction de montage pour la compensation du crépi, lesquelles coopèrent avec des vis de fixation (B) du boîtier de montage (1),
**caractérisé en ce que**
l'insert de compensation (A) présente au moins un premier moyen d'encliquetage (9) qui est adapté à coopérer par encliquetage avec un second moyen d'encliquetage (8) prévu sur la structure de support (2), le premier moyen encliquetage (9) et/ou le second moyen d'encliquetage (8) étant réalisé à la manière d'un ressort d'encliquetage.

2. Appareil d'installation électrique/électronique selon la revendication 1, **caractérisé en ce qu'**au moins un premier moyen d'encliquetage (9) et/ou un second moyen d'encliquetage (8) est réalisé à la manière d'une ouverture.

3. Appareil d'installation électrique/électronique selon l'une des revendications 1 ou 2, **caractérisé en ce qu'**au moins un premier moyen d'encliquetage (9) et/ou un second moyen d'encliquetage (8) est réalisé à la manière d'un évidement.

4. Appareil d'installation électrique/électronique selon l'une des revendications 1 à 3, **caractérisé en ce qu'**au moins un premier moyen d'encliquetage (9) et/ou un second moyen d'encliquetage (8) est réalisé à la manière d'un bec d'encliquetage.

5. Appareil d'installation électrique/électronique selon l'une des revendications 1 à 4, **caractérisé en ce qu'**au moins deux premiers moyens d'encliquetage (9) sont présents sur l'insert de compensation (A).

6. Appareil d'installation électrique/électronique selon l'une des revendications 1 à 5, **caractérisé en ce qu'**au moins deux seconds moyens d'encliquetage (8) sont présents sur la structure de support (2).

7. Appareil d'installation électrique/électronique selon l'une des revendications 1 à 6, **caractérisé en ce qu'**au moins une base d'actionnement (6) prévue pour coopérer avec un outil de déverrouillage (10) est présente au moins sur un premier moyen d'encliquetage (9) et/ou un second moyen d'encliquetage (8).

8. Appareil d'installation électrique/électronique selon l'une des revendications 1 à 7, **caractérisé en ce que** ledit au moins un premier moyen d'encliquetage (9) et que ledit au moins un second moyen d'encliquetage (8) sont cachés par le couvercle design (5).

9. Appareil d'installation électrique/électronique selon l'une des revendications 1 à 8, **caractérisé en ce qu'**au moins un second moyen d'encliquetage (8) réalisé sous la forme d'un ressort d'encliquetage présente au moins une branche de retenue (7) coopérant par retenue avec un bord d'encliquetage (8a) de la structure de support (2) et au moins une branche d'encliquetage (8a) coopérant par encliquetage avec le premier moyen d'encliquetage (9) de l'insert de compensation (A).
